# EUROPEAN PATENT APPLICATION

(11) **EP 4 475 585 A1**
(43) Date of publication of application: **11.12.2024**
(21) Application number: 23766046.9
(22) Date of filing: 08.03.2023
(51) Int. Cl.: H04W 24/02

(54) **DATA ACQUISITION METHOD AND APPARATUS, TERMINAL, AND NETWORK SIDE DEVICE**

(30) Priority: 10.03.2022 CN 202210240740
(71) Applicant: VIVO MOBILE COMMUNICATION CO., LTD., Dongguan, Guangdong 523863 (CN)
(72) Inventor: BAO, Wei, Dongguan, Guangdong 523863 (CN); CHONG, Weiwei, Dongguan, Guangdong 523863 (CN)
(74) Representative: Murgitroyd & Company
(86) International application number: PCT/CN2023/080302
(87) International publication number: WO 2023/169469

(57) **Abstract**

This application discloses a data collection method and apparatus, a terminal, and a network-side device, and pertains to the field of wireless communication. A data collection indication method according to embodiments of this application includes: receiving, by a second network-side device, a data collection request sent by a first network-side device; determining, by the second network-side device based on the data collection request, a target terminal participating in data collection; and triggering, by the second network-side device, sending of indication information to the target terminal, where the indication information is used to indicate the target terminal to participate in data collection.

## Description

### CROSS-REFERENCE TO RELATED APPLICATIONS

The present invention claims priority to Chinese Patent Application No. 202210240740.7, filed with the China National Intellectual Property Administration on March 10, 2022, and entitled "DATA COLLECTION METHOD AND APPARATUS, TERMINAL, AND NETWORK-SIDE DEVICE", which is incorporated herein by reference in its entirety.

### TECHNICAL FIELD

This application pertains to the field of wireless communication technologies and specifically relates to a data collection method and apparatus, a terminal, and a network-side device.

### BACKGROUND

In mobile communication systems, a network may require some terminals (User Equipment, UE) to provide collected data, for example, network signal quality in a specific area, quality of service (Quality of Service, QoS) or quality of experience (Quality of Experience, QoE) for a specific service, moving speed of UE, quantity of specific objects in a specific area, and speed or size of a specific object existing in a specific area.

However, no effective solution has yet been proposed as to how appropriate UE is triggered to perform data collection.

### SUMMARY

Embodiments of this application provide a data collection method and apparatus, a terminal, and a network-side device, so as to trigger appropriate UE to perform data collection.

According to a first aspect, a data collection indication method is provided, including: receiving, by a second network-side device, a data collection request sent by a first network-side device; determining, by the second network-side device based on the data collection request, a target terminal participating in data collection; and triggering, by the second network-side device, sending of indication information to the target terminal, where the indication information is used to indicate the target terminal to participate in data collection.

According to a second aspect, a data collection indication apparatus is provided, including: a first receiving module configured to receive a data collection request sent by a first network-side device; a first determining module configured to determine, based on the data collection request, a target terminal participating in data collection; and a first sending module configured to trigger sending of indication information to the target terminal, where the indication information is used to indicate the target terminal to participate in data collection.

According to a third aspect, a data collection method is provided, including: receiving, by a target terminal, indication information, where the indication information is used to indicate the target terminal to participate in data collection; and performing, by the target terminal, data collection based on the indication information.

According to a fourth aspect, a data collection apparatus is provided, including: a second receiving module configured to receive indication information, where the indication information is used to indicate a target terminal to participate in data collection; and a collection module configured to perform data collection based on the indication information.

According to a fifth aspect, a network-side device is provided, where the network device-side includes a processor and a memory, the memory stores a program or an instruction executable on the processor, and when the program or instruction is executed by the processor, the steps of the method according to the first aspect are implemented.

According to a sixth aspect, a network-side device is provided, including a processor and a communication interface, where the processor is configured to implement the steps of the method according to the first aspect, and the communication interface is configured to communicate with an external device.

According to a seventh aspect, a terminal is provided, where the terminal includes a processor and a memory, the memory stores a program or an instruction executable on the processor, and when the program or instruction is executed by the processor, the steps of the method according to the third aspect are implemented.

According to an eighth aspect, a terminal is provided, including a processor and a communication interface, where the processor is configured to implement the steps of the method according to the third aspect, and the communication interface is configured to communicate with an external device.

According to a ninth aspect, a data collection system is provided, including a terminal and a network-side device, where the terminal may be configured to execute the steps of the method according to the third aspect, and the network-side device may be configured to execute the steps of the method according to the first aspect.

According to a tenth aspect, a readable storage medium is provided, where the readable storage medium stores a program or an instruction, and when the program or instruction is executed by a processor, the steps of the method according to the first aspect are implemented, or the steps of the method according to the third aspect are implemented.

According to an eleventh aspect, a chip is provided, where the chip includes a processor and a communication interface, the communication interface is coupled to the processor, and the processor is configured to run a program or an instruction to implement the steps of the method according to the first aspect or the steps of the method according to the third aspect.

According to a twelfth aspect, a computer program/program product is provided, where the computer program/program product is stored in a storage medium, and the computer program/program product is executed by at least one processor to implement the steps of the method according to the first aspect or the steps of the method according to the third aspect.

In the embodiments of this application, after receiving the data collection request sent by the first network-side device, the second network-side device determines, based on the data collection request, the target terminal participating in data collection, and triggers sending of the indication information to the target terminal, indicating the target terminal to participate in data collection, thereby triggering the target terminal to participate in data collection.

### BRIEF DESCRIPTION OF DRAWINGS

FIG. 1 is a block diagram of a wireless communication system to which the embodiments of this application are applicable;
FIG. 2 is a schematic diagram of a network architecture according to an embodiment of this application;
FIG. 3 is a schematic flowchart of a data collection indication method according to an embodiment of this application;
FIG. 4 is a schematic flowchart of a data collection method according to an embodiment of this application;
FIG. 5 is a schematic structural diagram of a data collection indication apparatus according to an embodiment of this application;
FIG. 6 is a schematic structural diagram of a data collection apparatus according to an embodiment of this application;
FIG. 7 is a schematic structural diagram of a communication device according to an embodiment of this application;
FIG. 8 is a schematic diagram of a hardware structure of a terminal according to an embodiment of this application; and
FIG. 9 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6th generation (6^{th} Generation, 6G) communication system.

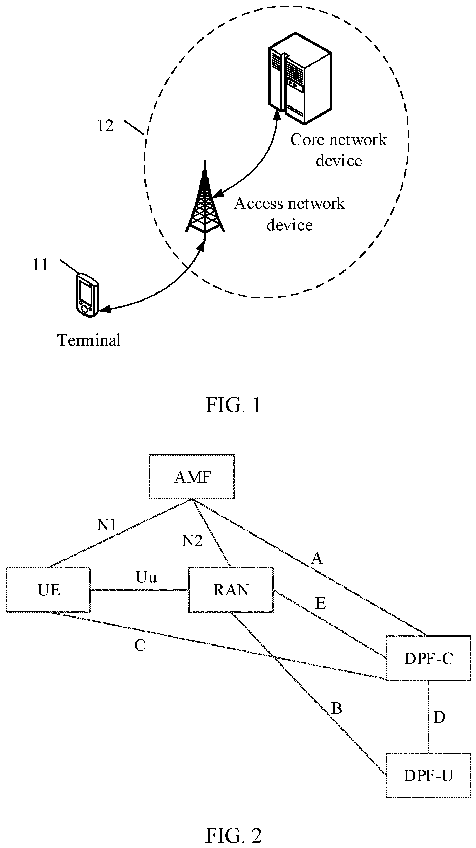

FIG. 1 is a block diagram of a wireless communication system to which the embodiments of this application are applicable. The wireless communication system includes a terminal 11 and a network-side device 12. The terminal 11 may be a terminal-side device such as a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine. Wearable devices include smart watches, smart bands, smart earphones, smart glasses, smart jewelry (smart bangles, smart bracelets, smart rings, smart necklaces, smart foot bangles, smart anklets, and the like), smart wristbands, smart clothing, and the like. It should be noted that a specific type of the terminal 11 is not limited in the embodiments of this application. The network-side device 12 may include an access network device and/or a core network device. The access network device 12 may also be referred to as a radio access network device, a radio access network (Radio Access Network, RAN), a radio access network function, or a radio access network unit. The access network device 12 may include base stations, wireless local area network (Wireless Local Area Networks, WLAN) access points, wireless fidelity (Wireless Fidelity, WiFi) nodes, or the like. The base station may be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device may include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, L-NEF), binding support function (Binding Support Function, BSF), application function (Application Function, AF), and the like. It should be noted that in the embodiments of this application, only the core network device in the NR system is introduced as an example, and a specific type of the core network device is not limited.

FIG. 2 is a schematic diagram of a network architecture according to an embodiment of this application. As shown in FIG. 2, in the embodiments of this application, two new logical network nodes are introduced, namely data plane function-control (Data Plane Function-Control, DPF-C) and data plane function-user (Data Plane Function-User, DPF-U). The functions of the two logical nodes, DPF-C and DPF-U, are to assist in the selection of UE participating in data collection and to establish connections with the UE for receiving collected data reported by the UE. The functions of the DPF-C and the DPF-U may be implemented in one physical node, and the functions of the DPF-C and the DPF-U may be implemented through an existing physical node.

As shown in FIG. 2, in this embodiment of this application, five related interfaces are also introduced:
(1) an interface between the DPF-C and a core network service data control plane node (for example, AMF): interface A;
(2) an interface between the DPF-U and a radio access network (Radio Access Network, RAN node) (for example, a base station): interface B;
(3) an interface between UE and the DPF-C: interface C;
(4) an interface between the DPF-C and the DPF-U: interface D; and
(5) an interface between the RAN and the DPF-C: interface E.

With the network architecture shown in FIG. 2 used, when data collection is performed, the following process may be executed.
1. The DPF-C notifies the AMF of characteristic information of UE required to be selected, including: location, capability, willingness of the user to participate in collection of data of specific types, the number of UE required, and the like.
2. The AMF may determine, based on description of UE characteristics by the DPF-C, a group of CP UE IDs that satisfy the conditions.
3. The AMF performs paging based on UE corresponding to the determined CP UE ID.

Optionally, the AMF may carry indication in paging: data plane paging, indicating that the paged UE needs to perform data collection.

Alternatively, if the UE is in a connected state, the AMF may also send a UE-dedicated message to the UE corresponding to the CP UE ID, indicating performing of data collection by the UE.

4. The UE responds to the paging and establishes a connection with the DPF-C or DPF-U. Response of the UE to the paging may be based on a data plane (Data Plane, DP) UE ID to hide a mapping relationship between a control plane (Control Plane, CP) UE ID and a DP UE ID.

The following describes in detail the data collection method provided in the embodiments of this application through some embodiments and application scenarios thereof with reference to the accompanying drawings.

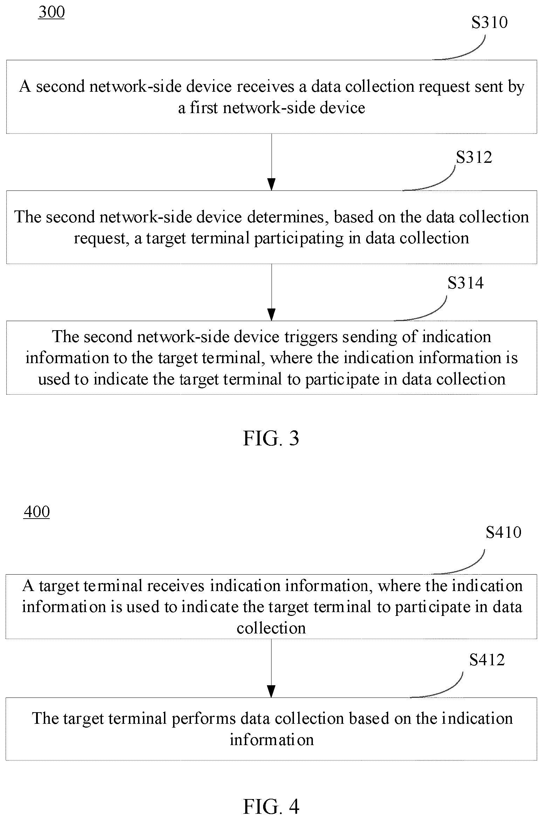

FIG. 3 is a schematic flowchart of a data collection indication method according to an embodiment of this application. The method 300 may be performed by a second network-side device. In other words, the method may be performed by software or hardware installed on the second network-side device. As shown in FIG. 3, the method may include the following steps.

S310. A second network-side device receives a data collection request sent by a first network-side device.

In this embodiment of this application, the first network-side device may be the DPF-U or DPF-C shown in FIG. 2.

In a possible implementation of this embodiment of this application, information carried in the data collection request sent by the first network-side device includes at least one of the following:
(1) type indication information for indicating that request type of the data collection request is data collection;
(2) characteristic information of a terminal participating in data collection;
(3) type of data required to be collected, that is, kind of data required to be collected, for example, data related to coverage quality and data related to service quality; and
(4) first identification information for indicating purpose of collected data.

The first network-side device may trigger the terminal to perform data collection for various purposes. To enable the first network-side device to distinguish the purpose of collected data when receiving the collected data reported by the terminal, the first network-side device can carry an identifier in the first data collection request, and the terminal can also carry this identifier when reporting the collected data, so that the first network-side device can determine the purpose of the data collected by the terminal. For example, the network-side device configures UE to separately collect two types of data: one is data related to coverage quality, used for analyzing signal quality, and one is data related to service quality, used for analyzing QoS. The first identification information of the two types of data are 1 and 2 respectively. For the reported data of the UE, if it carries identifier 1, the network-side device can know that the collected data is used for evaluating signal; or if it carries identifier 2, the network-side device can know that the collected data is used for evaluating QoS.

In a possible implementation, the characteristic information of a terminal includes at least one of the following:
(1) Second identification information for indicating a terminal participating in data collection. For example, a second identifier may include a control plane identifier (Identifier, ID) of UE, such as international mobile subscriber identity (International Mobile Subscriber Identity, IMSI), S-temporary mobile subscription identifier (S-Temporary Mobile Subscription Identifier, S-TMSI), and another identifier that can be used by AMF to identify the UE. Certainly, the second identification information is not limited thereto. The second identification information may not be the control plane ID of the UE but another identifier of the UE. This identifier may not be assigned by the network side for the UE, but is mapped by the first network-side device based on the control plane ID of the UE.
(2) First indication information for indicating an area in which the terminal is located. In other words, the first indication information is used to indicate the area in which the terminal participating in data collection is located, meaning that the terminal located in the area indicated by the first indication information participates in data collection. The first indication information may be a logical identifier included in a collection area. For example, the first indication information may include identifiers of one or more of the following: public land mobile network (Public Land Mobile Network, PLMN), cell (Cell), tracking area (Tracking Area, TA), RAN-based notification area (RAN-based Notification Area, RNA), and base station.
(3) Second indication information for indicating capability required for the terminal. In other words, the second indication information is used to indicate the capability required for the terminal participating in data collection, and a terminal with the capability indicated by the second indication information can participate in data collection.
(4) Third indication information for indicating willingness of the terminal to participate in collection of data of target type. In other words, the third indication information is used to indicate that the terminal participating in data collection is required to have the willingness of participating in collection of data of target type. For example, subscription information of the terminal allows for the collection of data of corresponding target type.
(5) Fourth indication information for indicating the number of terminals required to participate in data collection.

In this embodiment of this application, the first network-side device can determine by itself that it needs to initiate data collection, or the first network-side device can also receive information from other nodes, where the information triggers data collection, so as to send a data collection request to the second network-side device.

In this embodiment of this application, to enable the first network-side device to know whether the second network-side device has received the first data collection request and/or accepted the first data collection request, the second network-side device can also return feedback information to the first network-side device after receiving the first data collection request. Therefore, in a possible implementation, after S310, the method may further include: the second network-side device sends first feedback information to the first network-side device.

The first feedback information is used to indicate at least one of the following:
that the second network-side device has received the data collection request;
that the second network-side device has accepted the data collection request; and
that the second network-side device has rejected the data collection request.

For example, the first feedback information may indicate that the first data collection request has been successfully received but the first data collection request is rejected; the first feedback information may indicate that the first data collection request is rejected; or the first feedback information may indicate that the first data collection request is accepted.

In a possible implementation, if the first data collection request is rejected, the first network-side device can re-initiate the data collection request process. In other words, in a case that the first feedback information received by the first network-side device indicates that the first data collection request is rejected, after sending the first data collection request, the first network-side device waits for a first preset time before re-triggering sending of the first data collection request; or in a case that the first feedback information received by the first network-side device indicates that the first data collection request is rejected, after receiving the first feedback information, the first network-side device waits for a second preset time before re-triggering sending of the first data collection request.

In other words, the first network-side device may start timing after sending the first data collection request, and the first network-side device, if receiving the first feedback information indicating that the first data collection request is rejected, re-triggers sending of the first data collection request after the timing reaches the first preset time. Alternatively, the first network-side device may start timing after receiving the first feedback information indicating that the first data collection request is rejected, and re-trigger sending of the first data collection request after the timing reaches the second preset time.

In another possible implementation, the first network-side device may fail to receive the first feedback information. For example, the first data collection request is lost and fails to reach the second network-side device, or the first data collection request reaches the second network-side device, but the first feedback information sent by the second network-side device is lost and fails to reach the first network-side device. In this case, the first network-side device can also re-trigger sending of the first data collection request. That is, in a case of not receiving the first feedback information within a third preset time after sending the first data collection request, the first network-side device waits for the first preset time before re-triggering sending of the first data collection request.

In the foregoing various possible implementations, after triggering sending of the first data collection request, the first network-side device can send a data collection request again. Parameters carried in this data collection request may be the same as or different from parameters carried in the data collection request sent last time, which can be determined based on actual application, and is not limited in this embodiment of this application.

In the foregoing various possible implementations, the first preset time, the second preset time, and the third preset time may be determined by the first network-side device based on actual application or may be preset, which is not specifically limited in this embodiment of this application.

In an example, the first network-side device is the DPF-C as in FIG. 2, and the second network-side device is a core network node, for example, AMF. In this embodiment of this application, optionally, the DPF-C receives information from another node, and the information triggers a subsequent data collection process, or the DPF-C may also initiate a data collection process by itself. Therefore, the DPF-C initiates a data collection process to a core network service data control plane node (for example, AMF). For example, the DPF-C sends a request message to the AMF, and the request message includes one or more of the following information:
(1) request type: data collection;
(2) characteristics of UE participating in data collection, which may include one or a combination of more of the following: control plane ID of the UE (an identifier that can be used by the AMF to identify the UE, such as IMSI or S-TMSI), location of the UE, capability required for the UE, willingness of the user to participate in collection of data of specific types (such as whether subscription information allows data collection of a corresponding type), and the number of UE required to participate;
(3) type of data collection, that is, kind of data required to be collected, such as data related to coverage quality and service quality;
(4) configuration of data collection, such as period of data collection and period of data reporting; and
(5) identification information for indicating purpose of collected data.

Optionally, the DPF-C receives feedback information sent by the core network service data control plane node. The feedback information is used for at least one of the following purposes:
(1) the data collection request has been accepted (that is, the AMF will trigger the UE to perform data collection and reporting);
(2) the data collection request has been rejected (that is, the AMF does not trigger the UE to perform data collection and reporting); and
(3) the data collection request has been successfully received.

If the data collection is rejected, the DPF-C can re-initiate the request process. In a preferred implementation, the DPF-C re-initiates the request process after waiting for a preset time; where a start time point of the preset time is when the request is sent, or may be when the feedback is received.

If the DPF-C does not receive the feedback information within a predetermined time, the DPF-C can re-initiate the request process. In a preferred implementation, the DPF-C re-initiates the request process after waiting for a preset time; where a start time point of the preset time is when the request is sent, or may be when the feedback is received.

S312. The second network-side device determines, based on the data collection request, a target terminal participating in data collection.

In a possible implementation, the second network-side device may determine the target terminal based on the information carried in the data collection request. Therefore, in this possible implementation, step S312 may include: the second network-side device selects based on the characteristic information of a terminal participating in data collection at least one candidate terminal matching the characteristic information as the target terminal.

For example, if the characteristic information of the terminal in the data collection request includes the second identification information (that is, identification information indicating the terminal participating in data collection), the second network-side device can obtain, based on the second identification information, at least one candidate terminal corresponding to the second identification information. If the characteristic information further includes the fourth indication information, the second network-side device selects target terminals with the number corresponding to the fourth indication information from at least one candidate terminal.

For another example, if the characteristic information of the terminal in the data collection request includes the first indication information for indicating the area in which the terminal is located and the second indication information for indicating the capability required for the terminal, the second network-side device can select at least one candidate terminal that is located in the area indicated in the first indication information and has the capability indicated in the second indication information. If the characteristic information includes no other information, the second network-side device can determine the at least one candidate terminal as the target terminal. If the characteristic information further includes other information, for example, the fourth indication information, the second network-side device can select terminals with the number corresponding to the fourth indication information from the at least one candidate terminal as the target terminals.

For another example, if the characteristic information of the terminal in the data collection request includes the first indication information for indicating the area in which the terminal is located, the second indication information for indicating the capability required for the terminal, and the third indication information for indicating willingness of the terminal to participate in collection of data of target type, the second network-side device can select at least one candidate terminal that is located in the area indicated in the first indication information, has the capability indicated in the second indication information, and has the willingness to collect the data of target type indicated in the third indication information. If the characteristic information includes no other information, the second network-side device can determine the at least one candidate terminal as the target terminal. If the characteristic information further includes other information, for example, the fourth indication information, the second network-side device can select terminals with the number corresponding to the fourth indication information from the at least one candidate terminal as the target terminals.

S314. The second network-side device triggers sending of indication information to the target terminal, where the indication information is used to indicate the target terminal to participate in data collection.

In actual application, the target terminal may be in a non-connected state or a connected state. For target terminals in different states, the second network-side device may send the indication information in different manners. Therefore, in a possible implementation, the second network-side device sending indication information to the target terminal includes: in a case that the target terminal is in a non-connected state, the second network-side device triggering a base station to send a paging message to the target terminal, where the paging message carries the indication information, and the indication information is used to indicate that the target terminal is paged for data collection; or in a case that the target terminal is in a connected state, the second network-side device sending a dedicated message to the target terminal, where the dedicated message carries the indication information for notifying the target terminal to participate in data collection. For example, if the target terminal in an idle (idle) state, the second network-side device can initiate the paging process for the target terminal, with the indication information introduced in the paging message (for example, the second network-side device notifies the base station through an N2 interface, and the base station sends the paging message through a Uu interface), indicating that the target terminal is paged for the purpose of data collection. If it is determined that the target terminal is in a connected state, the second network-side device informs, through a non access stratum (Non Access Stratum, NAS) message, the target terminal to participate in data collection.

After the second network-side device triggers sending of the indication information to the target terminal, the target terminal determines, based on the indication information, to participate in data collection, and the target terminal can obtain configuration information of data collection from the second network-side device. Therefore, in a possible implementation, after S314, the method may further include the following steps.

Step 1. Receive a configuration information acquisition request that is sent by the target terminal based on a first identifier (ID).

For example, the target terminal may send the configuration information acquisition request carrying the first identifier to the second network-side device, or the target terminal may also send the configuration information acquisition request through a UE-dedicated channel corresponding to the first ID.

Step 2. Send configuration information of data collection to the target terminal, where the configuration information of data collection includes at least one of the following:
(1) type of data required to be collected; where the configuration information can indicate type of data the target terminal needs to collect;
(2) first identification information for indicating purpose of collected data, where the configuration information can indicate the purpose of collected data; and
(3) configuration of data collection, where optionally, the configuration of data collection includes at least one of the following: period of data collection and period of data reporting.

In an example, the second network-side device is a core network service data control plane node, and the first network-side device is a DPF-C. In this embodiment of this application, the process of the second network-side device indicating performing of data collection may include the following steps.

Step 1. The core network service data control plane node (for example, AMF) receives a data collection request sent by the DPF-C.

Optionally, the AMF can feed back acceptance, rejection, or successful receipt of the data collection request message.

Step 2. The AMF, based on the data collection request sent by the DPF-C, selects UE (or UE list) that satisfies the conditions, and determines information of identifier (or identifier list) of the UE participating in data collection.

Step 3. If the determined UE is in a non-connected state, the AMF initiates the paging process for the UE (or UE in the identifier list); or if the determined UE is in a connected state, the AMF directly informs, through a dedicated message (for example, an NAS message), the UE to participate in data collection.

For example, the AMF sends a paging message through an N2 interface, introducing an indication indicating that the UE is paged for the purpose of data collection; and the base station, based on this indication, carries corresponding indication information in the paging message through a Uu interface, indicating that the paged UE is paged for the purpose of data collection.

In the data collection indication method provided in the embodiments of this application, after receiving the data collection request sent by the first network-side device, the second network-side device determines, based on the data collection request, the target terminal participating in data collection, and sends the indication information to the target terminal, indicating the target terminal to participate in data collection, thereby triggering the target terminal to participate in data collection.

FIG. 4 is a schematic flowchart of a data collection method according to an embodiment of this application. The method 400 may be performed by a terminal. In other words, the method may be performed by software or hardware installed on the terminal. As shown in FIG. 4, the method may include the following steps.

S410. A target terminal receives indication information, where the indication information is used to indicate the target terminal to participate in data collection.

In this embodiment of this application, the indication information may be indication information whose sending is triggered by a second network-side device using the foregoing method 300. For details, refer to the description in the method 300. Details are not described herein again.

In a possible implementation, the target terminal may be in a non-connected state, for example, an idle state. The second network-side device can send the indication information by triggering a base station to send a paging message to the target terminal. Therefore, in this possible implementation, S410 may include: in a case that the target terminal is in a non-connected state, the target terminal receives a paging message paging the target terminal, where the paging message carries the indication information, and the indication information is used to indicate that the target terminal is paged for data collection.

In another possible implementation, the target terminal may be in a connected state. The second network-side device can send the indication information by sending a dedicated message to the target terminal. Therefore, in a possible implementation, S410 may include: in a case that the target terminal is in a connected state, the target terminal receives a dedicated message sent by the second network-side device, where the dedicated message carries the indication information.

S412. The target terminal performs data collection based on the indication information.

In this embodiment of this application, after receiving the indication information, the target terminal can perform data collection based on the indication information. For example, if subscription information of the target terminal allows the target terminal to perform collection of data of a specific type, the target terminal can perform collection of data of that type after receiving the indication information; or if the target terminal has a capability to collect data of a specific type, the target terminal can collect data of that type after receiving the indication information. Optionally, the target terminal may further obtain configuration information of data collection from the network side, and then perform data collection based on the configuration information of data collection. Therefore, in a possible implementation, S412 may include the following steps.

Step 1. The target terminal sends a configuration information acquisition request to a first target network-side device based on a first ID.

For example, the target terminal may send the configuration information acquisition request carrying the first ID to the first target network-side device, or the target terminal may send the configuration information acquisition request based on a terminal-dedicated channel corresponding to the first ID.

Optionally, if the target terminal is in a non-connected state, before the target terminal sends the configuration information acquisition request to the first target network-side device based on the first ID, the target terminal may first establish a connection with the first target network-side device.

Step 2. The target terminal acquires configuration information of data collection sent by the first target network-side device.

Optionally, the configuration information of data collection includes at least one of the following:
(1) type of data required to be collected;
(2) first identification information for indicating purpose of collected data; and
(3) configuration of data collection, for example, period of data collection and period of data reporting.

Step 3. The target terminal performs data collection based on the configuration information of data collection.

The target terminal may perform corresponding data collection based on the configuration information of data collection, for example, collecting data of the type indicated in the configuration information of data collection as required to be collected, performing data collection according to the period of data collection, or performing reporting according to the period of data reporting.

In the above possible implementation, the first target network-side device includes a first network-side device or a second network-side device. In other words, the target terminal may obtain the configuration information of data collection from the first network-side device or from the second network-side device. For example, the target terminal may establish a connection with a DPF-C to obtain the configuration information of data collection from a DPF-C, or the target terminal may establish a connection with an AMF to obtain the configuration information of data collection from the AMF.

In a possible implementation, after S412, the method may further include: the target terminal reports a data collection report to a second target network-side device based on a second ID, where the data collection report includes data collected by the target terminal, and the second target network-side device includes a first network-side device or a third network-side device associated with the first network-side device. For example, the target terminal may perform reporting according to the period of data reporting in the configuration information of data collection.

In the above possible implementations, the first network-side device may be the DPF-C in FIG. 2, and the third network-side device may be the DPF-U in FIG. 2. For example, the target terminal can establish a connection with the DPF-C or DPF-U to report the data collection report to the DPF-C or DPF-U.

Optionally, the target terminal may report the data collection report carrying the second ID to the second target network-side device; or the target terminal may also send the configuration information acquisition request to the second target network-side device through a terminal-dedicated channel corresponding to the second ID.

In a possible implementation, the first ID and the second ID may be different, and the second target network-side device does not save the association relationship thereof, so that the second target network-side device cannot associate the paged/notified UE (first ID) for data collection with the UE (second ID) reporting a collection result. In this way, the second target network-side device receiving the data collection report cannot determine the identity of the UE (that is, the first ID), and the second target network-side device is not sure about which UE the collected data is from, thereby protecting the privacy of the UE performing data collection.

In a possible implementation, the data collection report may further include the configuration information of data collection. In this possible implementation, the second target network-side device can determine the purpose of collected data reported by the target terminal.

In an example, the second network-side device is a core network service data control plane node, and the first network-side device is a DPF-C. In an implementation of this embodiment of this application, the process of the terminal performing data collection may include the following steps.

Step 1. UE in a non-connected state receives a paging message, and determines, based on indication in the paging message, that it needs to perform data collection.

When a paged ID carried in the paging message matches a paging ID of the UE, the UE determines that it is paged, and the UE determines, based on the indication carried in the paging message, that it needs to perform data collection.

The paged UE establishes a connection with the network.

UE in a connected state receives a dedicated message (for example, an NAS message) notification, and determines that it needs to participate in a data collection process.

Step 2. The UE obtains configuration information of data collection.

Optionally, the UE may use ID1 to establish a connection with an AMF and obtain the configuration information of data collection from the AMF.

Step 3. The UE performs data collection based on the configuration information of data collection.

Step 4. The UE establishes a connection with a DPF-C or DPF-U and reports collected data.

In an optimized implementation, the UE may use ID2 to establish a connection with the DPF-C or DPF-U.

In an optimized implementation, when reporting the collected data, the UE can report the configuration information of data collection so that the NW can determine purpose of the collected data.

Optionally, ID1 and ID2 are different. In this case, the core network (Network, NW) cannot determine the identity of the UE reporting the collected data, that is, the NW is not sure about which UE the collected data is from, thereby protecting the privacy of the UE performing data collection.

In an example, the second network-side device is a core network service data control plane node, and the first network-side device is a DPF-C. In another implementation of this embodiment of this application, the process of the terminal performing data collection may include the following steps.

Step 1. UE in a non-connected state receives a paging message, and determines, based on indication in the paging message, that it needs to perform data collection.

When a paged ID carried in the paging message matches a paging ID of the UE, the UE determines that it is paged, and then the UE can determine, based on the indication carried in the paging message, that it needs to perform data collection.

UE in a connected state may receive a dedicated message (for example, an NAS message) notification, and determines, based on the dedicated message, that it needs to participate in a data collection process.

Step 2. The UE establishes a connection with the DPF-C and obtains configuration information of data collection from the DPF-C.

The UE may use ID1 to establish a connection with the DPF-C. ID1 has no mapping relationship with the paging ID, that is, the NW cannot deduce the paging ID (ID3) of the UE through ID1, thereby protecting the privacy of the UE.

Step 3. The UE performs data collection based on the configuration information of data collection.

Step 4. The UE establishes a connection with a DPF-C or DPF-U and reports collected data.

In an optimized implementation, the UE may use ID2 to establish a connection with the DPF-C or DPF-U.

In an optimized implementation, in a case that ID1 and ID2 are different, when reporting the collected data, the UE can report the configuration information of data collection so that the NW can determine purpose of the collected data.

With the technical solutions provided in the embodiments of this application, the target terminal can perform data collection upon receiving indication for performing data collection, so that the network-side device can select UE that satisfies the requirements to perform data collection. In addition, when reporting the collected data, the UE can hide the identity of the UE, thereby protecting the privacy of the UE.

The data collection indication method provided in the embodiments of this application may be executed by a data collection indication apparatus. In the embodiments of this application, the data collection indication method being executed by the data collection indication apparatus is used as an example to describe the data collection indication apparatus according to the embodiments of this application.

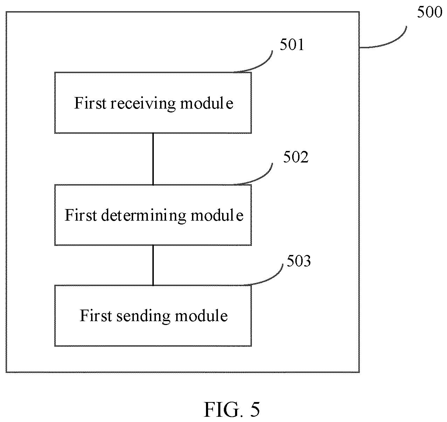

FIG. 5 is a schematic structural diagram of a data collection indication apparatus according to an embodiment of this application. As shown in FIG. 5, the apparatus 500 mainly includes a first receiving module 501, a first determining module 502, and a first sending module 503.

In this embodiment of this application, the first receiving module 501 is configured to receive a data collection request sent by a first network-side device; the first determining module 502 is configured to determine, based on the data collection request, a target terminal participating in data collection; and the first sending module 503 is configured to trigger sending of indication information to the target terminal, where the indication information is used to indicate the target terminal to participate in data collection.

In a possible implementation, the first determining module 502 determining, based on the data collection request, a target terminal participating in data collection includes:
selecting, based on characteristic information of the terminal participating in data collection, at least one candidate terminal matching the characteristic information as the target terminal.

In a possible implementation, the first sending module 503 is further configured to send first feedback information to the first network-side device; where
the first feedback information is used to indicate at least one of the following:
the data collection request has been received;
the data collection request has been accepted; and
the data collection request has been rejected.

In a possible implementation, the first sending module 503 triggering sending of indication information to the target terminal includes:
in a case that the target terminal is in a non-connected state, triggering a base station to send a paging message to the target terminal, where the paging message carries the indication information, and the indication information is used to indicate that the target terminal is paged for data collection; or
in a case that the target terminal is in a connected state, sending a dedicated message to the target terminal, where the dedicated message carries the indication information.

In a possible implementation, the first receiving module 501 is further configured to receive a configuration information acquisition request sent by the target terminal, where the configuration information acquisition request carries a first ID; and the first sending module 503 is further configured to send configuration information of data collection to the target terminal, where the configuration information of data collection includes at least one of the following: type of data required to be collected, first identification information indicating purpose of collected data, and configuration of data collection.

The data collection indication apparatus in the embodiments of this application may be an electronic device such as an electronic device with an operating system, or a component in an electronic device such as an integrated circuit or chip. The electronic device may be a network-side device. For example, the network-side device may include but is not limited to the types of the core network device listed above, which is not specifically limited in the embodiments of this application.

The data collection indication apparatus provided in the embodiments of this application can implement the processes implemented by the second network-side device in the method embodiments in FIGs. 3 and 4, with the same technical effects achieved. To avoid repetition, details are not described herein again.

The data collection method provided in the embodiments of this application may be executed by a data collection apparatus. In embodiments of this application, the data collection method being executed by the data collection apparatus is used as an example to describe the data collection apparatus according to the embodiments of this application.

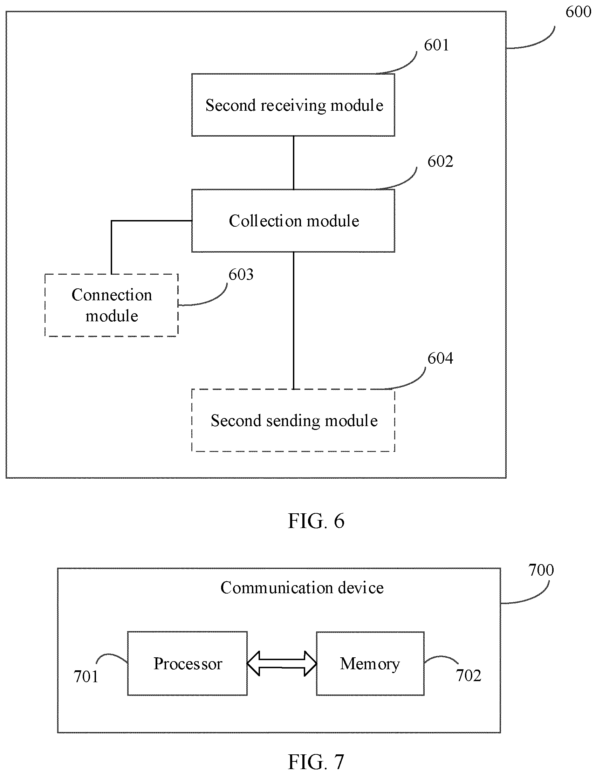

FIG. 6 is a schematic structural diagram of a data collection apparatus according to an embodiment of this application. As shown in FIG. 6, the apparatus mainly includes a second receiving module 601 and a collection module 602.

In this embodiment of this application, the second receiving module 601 is configured to receive indication information, where the indication information is used to indicate a target terminal to participate in data collection; and the collection module 602 is configured to perform data collection based on the indication information.

In a possible implementation, the collection module 602 performing data collection based on the indication information includes:
sending a configuration information acquisition request to a first target network-side device based on a first ID;
acquiring configuration information of data collection sent by the first target network-side device; and
performing data collection based on the configuration information of data collection.

In a possible implementation, the collection module 602 sending a configuration information acquisition request to a first target network-side device based on a first ID includes:
sending a configuration information acquisition request carrying the first ID to the first target network-side device; or
sending the configuration information acquisition request to the first target network-side device based on a terminal-dedicated channel corresponding to the first ID.

In a possible implementation, as shown in FIG. 6, the apparatus further includes a connection module 603 configured to: in a case that the target terminal is in a non-connected state, establish a connection with the first target network-side device.

In a possible implementation, as shown in FIG. 6, the apparatus further includes a second sending module 604 configured to report a data collection report to a second target network-side device based on a second ID, where the data collection report includes data collected by the target terminal, and the second target network-side device includes a first network-side device or a third network-side device associated with the first network-side device.

In a possible implementation, the second sending module 604 reporting a data collection report to a second target network-side device based on a second ID includes:
reporting a data collection report carrying the second ID to the second target network-side device; or
sending the configuration information acquisition request to the second target network-side device based on a terminal-dedicated channel corresponding to the second ID.

In a possible implementation, the second receiving module 601 receiving indication information includes:
in a case that the target terminal is in a non-connected state, receiving a paging message paging the target terminal, where the paging message carries the indication information, and the indication information is used to indicate that the target terminal is paged for data collection; or
in a case that the target terminal is in a connected state, receiving a dedicated message sent by a second network-side device, where the dedicated message carries the indication information.

The data collection apparatus in the embodiments of this application may be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The data collection apparatus provided in the embodiments of this application can implement the processes implemented by the target terminal in the method embodiments in FIGs. 3 and 4, with the same technical effects achieved. To avoid repetition, details are not described herein again.

Optionally, as shown in FIG. 7, an embodiment of this application further provides a communication device 700 including a processor 701 and a memory 702. The memory 702 stores a program or an instruction executable on the processor 701. For example, if the communication device 700 is a terminal, when the program or instruction is executed by the processor 701, the steps of the foregoing embodiment of the data collection method are implemented, with the same technical effects achieved. To avoid repetition, details are not described herein again. When the communication device 700 is a network-side device, the program or instruction is executed by the processor 701 to implement the steps of the foregoing embodiment of the data collection indication method, with the same technical effects achieved. To avoid repetition, details are not described herein again.

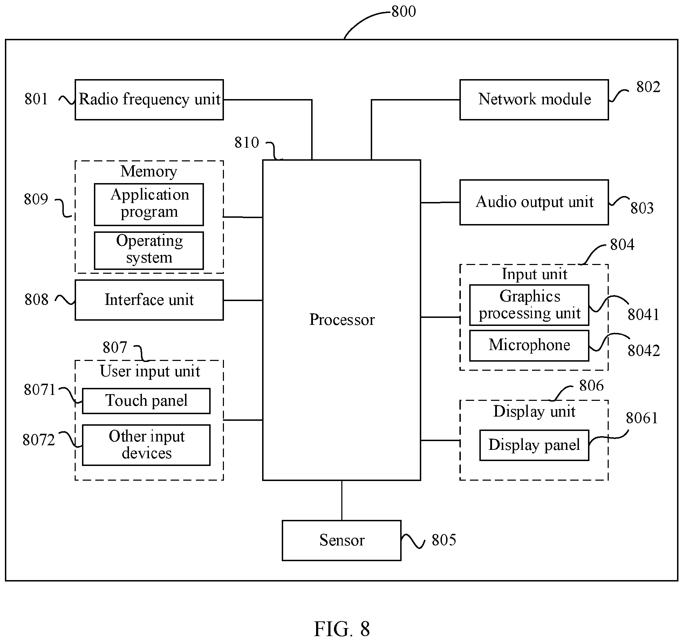

An embodiment of this application further provides a terminal including a processor and a communication interface, where the processor is configured to implement the steps of the foregoing embodiment of the data collection method, and the communication interface is configured to communicate with an external device. This terminal embodiment corresponds to the foregoing method embodiment on the terminal side. All processes and implementations in the foregoing method embodiment are applicable to this terminal embodiment, with the same technical effects achieved. Specifically, FIG. 8 is a schematic diagram of a hardware structure of a terminal implementing the embodiments of this application.

The terminal 800 includes but is not limited to at least part of these components: a radio frequency unit 801, a network module 802, an audio output unit 803, an input unit 804, a sensor 805, a display unit 806, a user input unit 807, an interface unit 808, a memory 809, a processor 810, and the like.

It can be understood by persons skilled in the art that the terminal 800 may further include a power supply (for example, a battery) supplying power to the components. The power supply may be logically connected to the processor 810 via a power management system, so that functions such as charge management, discharge management, and power consumption management are implemented via the power management system. The structure of the terminal shown in FIG. 8 does not constitute any limitation on the terminal, and the terminal may include more or fewer components than shown in the figure, or combine some of the components, or have different arrangements of the components. Details are not described herein.

It should be understood that in this embodiment of this application, the input unit 804 may include a graphics processing unit (Graphics Processing Unit, GPU) 8041 and a microphone 8042. The graphics processing unit 8041 processes image data of a static picture or video obtained by an image capture apparatus (such as a camera) in an image capture or video capture mode. The display unit 806 may include a display panel 8061. The display panel 8061 may be configured in a form of a liquid crystal display, an organic light-emitting diode display, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. Specifically, the other input devices 8072 may include but are not limited to a physical keyboard, a function button (for example, volume control button or on/off button), a trackball, a mouse, and a joystick. Details are not described herein.

In an embodiment of this application, the radio frequency unit 801 receives downlink data from a network-side device and transfers the data to the processor 810 for processing; and the radio frequency unit 801 can additionally send uplink data to the network-side device. Generally, the radio frequency unit 801 includes but is not limited to an antenna, an amplifier, a transceiver, a coupler, a low noise amplifier, a duplexer, and the like.

The memory 809 may be configured to store software programs or instructions and various data. The memory 809 may include a first storage are for storing programs or instructions and a second storage area for storing data. The first storage area may store an operating system, an application program or instructions required by at least one function (for example, a sound playback function or an image playback function), and the like. Additionally, the memory 809 may be a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 809 of the embodiments of this application includes but is not be limited to these and any other applicable types of memories.

The processor 810 may include one or more processing units. Optionally, the processor 810 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 810.

The radio frequency unit 801 is configured to receive indication information, where the indication information is used to indicate a target terminal to participate in data collection.

The processor 810 is configured to perform data collection based on the indication information.

An embodiment of this application further provides a network-side device including a processor and a communication interface, where the processor is configured to implement the steps of the foregoing embodiment of the data collection indication method, and the communication interface is configured to communicate with an external device. This network-side device embodiment corresponds to the foregoing network-side device method embodiment. All processes and implementations in the foregoing method embodiment are applicable to this network-side device embodiment, with the same technical effect achieved.

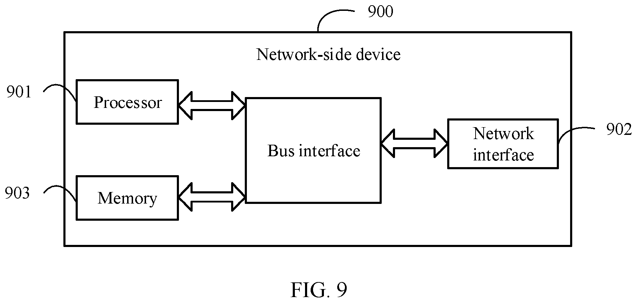

Specifically, an embodiment of this application further provides a network-side device. As shown in FIG. 9, the network-side device 900 includes a processor 901, a network interface 902, and memory 903. The network interface 902 is, for example, a common public radio interface (Common Public Radio Interface, CPRI).

Specifically, the network-side device 900 in this embodiment of the present invention further includes: an instruction or a program stored in the memory 903 and executable on the processor 901. The processor 901 invokes the instruction or program in the memory 903 to execute the method executed by the modules shown in FIG. 5, with the same technical effects achieved. To avoid repetition, details are not described herein again.

An embodiment of this application further provides a readable storage medium, where the readable storage medium stores a program or an instruction, and when the program or instruction is executed by a processor, the processes of the foregoing data collection indication method embodiments are implemented, or the processes of the foregoing data collection method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or an instruction to implement the processes of the foregoing data collection indication method embodiments, or to implement the processes of the foregoing data collection method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when the computer program/program product is executed by at least one processor, the processes of the foregoing data collection indication method embodiments are implemented, or the processes of the foregoing data collection method embodiments are implemented, with the same technical effects achieved. To avoid repetition, details are not described herein again.

An embodiment of this application further provides a data collection system including a terminal and a network-side device, where the terminal may be configured to execute the steps of the foregoing data collection method, and the network-side device may be configured to execute the steps of the foregoing data collection indication method.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A data collection indication method, comprising:
receiving, by a second network-side device, a data collection request sent by a first network-side device;
determining, by the second network-side device based on the data collection request, a target terminal participating in data collection; and
triggering, by the second network-side device, sending of indication information to the target terminal, wherein the indication information is used to indicate the target terminal to participate in data collection.

2. The method according to claim 1, wherein information carried in the data collection request comprises at least one of the following:
type indication information for indicating that request type of the data collection request is data collection;
characteristic information of a terminal participating in data collection;
type of data required to be collected; and
first identification information for indicating purpose of collected data.

3. The method according to claim 2, wherein the characteristic information of the terminal comprises at least one of the following:
second identification information for indicating a terminal participating in data collection;
first indication information for indicating an area in which the terminal is located;
second indication information for indicating capability required for the terminal;
third indication information for indicating willingness of the terminal to participate in collection of data of target type; and
fourth indication information for indicating the number of terminals required to participate in data collection.

4. The method according to claim 2, wherein the determining, by the second network-side device based on the data collection request, a target terminal participating in data collection comprises:
selecting, by the second network-side device based on the characteristic information of the terminal participating in data collection, at least one candidate terminal matching the characteristic information as the target terminal.

5. The method according to claim 1, wherein after the receiving, by a second network-side device, a data collection request sent by a first network-side device, the method further comprises:
sending, by the second network-side device, first feedback information to the first network-side device; wherein
the first feedback information is used to indicate at least one of the following:
that the second network-side device has received the data collection request;
that the second network-side device has accepted the data collection request; and
that the second network-side device has rejected the data collection request.

6. The method according to any one of claims 1 to 5, wherein the triggering, by the second network-side device, sending of indication information to the target terminal comprises:
in a case that the target terminal is in a non-connected state, triggering, by the second network-side device, a base station to send a paging message to the target terminal, wherein the paging message carries the indication information, and the indication information is used to indicate that the target terminal is paged for data collection; or
in a case that the target terminal is in a connected state, sending, by the second network-side device, a dedicated message to the target terminal, wherein the dedicated message carries the indication information.

7. The method according to any one of claims 1 to 5, wherein after the sending, by the second network-side device, indication information to the target terminal, the method further comprises:
receiving a configuration information acquisition request that is sent by the target terminal based on a first identifier ID; and
sending configuration information of data collection to the target terminal, wherein the configuration information of data collection comprises at least one of the following: type of data required to be collected, first identification information indicating purpose of collected data, and configuration of data collection.

8. The method according to claim 7, wherein the configuration of data collection comprises at least one of the following: period of data collection and period of data reporting.

9. A data collection method, comprising:
receiving, by a target terminal, indication information, wherein the indication information is used to indicate the target terminal to participate in data collection; and
performing, by the target terminal, data collection based on the indication information.

10. The method according to claim 9, wherein the performing, by the target terminal, data collection based on the indication information comprises:
sending, by the target terminal, a configuration information acquisition request to a first target network-side device based on a first ID;
acquiring, by the target terminal, configuration information of data collection sent by the first target network-side device; and
performing, by the target terminal, data collection based on the configuration information of data collection.

11. The method according to claim 10, wherein the sending, by the target terminal, a configuration information acquisition request to a first target network-side device based on a first ID comprises:
sending, by the target terminal, the configuration information acquisition request carrying the first ID to the first target network-side device; or
sending, by the target terminal, the configuration information acquisition request to the first target network-side device based on a terminal-dedicated channel corresponding to the first ID.

12. The method according to claim 10, wherein before the sending, by the target terminal, a configuration information acquisition request to a first target network-side device based on a first ID, the method further comprises:
in a case that the target terminal is in a non-connected state, establishing, by the target terminal, a connection with the first target network-side device.

13. The method according to any one of claims 10 to 12, wherein the first target network-side device comprises a first network-side device or a second network-side device.

14. The method according to any one of claims 10 to 12, wherein the configuration information of data collection comprises at least one of the following: type of data required to be collected, first identification information indicating purpose of collected data, and configuration of data collection.

15. The method according to claim 14, wherein the configuration of data collection comprises at least one of the following: period of data collection and period of data reporting.

16. The method according to any one of claims 9 to 15, wherein after the performing, by the target terminal, data collection based on the indication information, the method further comprises:
reporting, by the target terminal, a data collection report to a second target network-side device based on a second ID, wherein the data collection report comprises data collected by the target terminal, and the second target network-side device comprises a first network-side device or a third network-side device associated with the first network-side device.

17. The method according to claim 16, wherein the reporting, by the target terminal, a data collection report to a network side based on a second ID comprises:
reporting, by the target terminal, the data collection report carrying the second ID to the second target network-side device; or
sending, by the target terminal, the configuration information acquisition request to the second target network-side device based on a terminal-dedicated channel corresponding to the second ID.

18. The method according to claim 16, wherein the first ID is different from the second ID.

19. The method according to claim 16, wherein the data collection report further comprises configuration information of data collection.

20. The method according to any one of claims 9 to 19, wherein the receiving, by a target terminal, indication information comprises:
in a case that the target terminal is in a non-connected state, receiving, by the target terminal, a paging message paging the target terminal, wherein the paging message carries the indication information, and the indication information is used to indicate that the target terminal is paged for data collection; or
in a case that the target terminal is in a connected state, receiving, by the target terminal, a dedicated message sent by a second network-side device, wherein the dedicated message carries the indication information.

21. A data collection indication apparatus, comprising:
a first receiving module configured to receive a data collection request sent by a first network-side device;
a first determining module configured to determine, based on the data collection request, a target terminal participating in data collection; and
a first sending module configured to trigger sending of indication information to the target terminal, wherein the indication information is used to indicate the target terminal to participate in data collection.

22. The apparatus according to claim 21, wherein the first determining module determining, based on the data collection request, a target terminal participating in data collection comprises:
selecting, based on characteristic information of the terminal participating in data collection, at least one candidate terminal matching the characteristic information as the target terminal.

23. The apparatus according to claim 21, wherein the first sending module is further configured to send first feedback information to the first network-side device; wherein
the first feedback information is used to indicate at least one of the following:
the data collection request has been received;
the data collection request has been accepted; and
the data collection request has been rejected.

24. The apparatus according to any one of claims 21 to 23, wherein the first sending module triggering sending of indication information to the target terminal comprises:
in a case that the target terminal is in a non-connected state, triggering a base station to send a paging message to the target terminal, wherein the paging message carries the indication information, and the indication information is used to indicate that the target terminal is paged for data collection; or
in a case that the target terminal is in a connected state, sending a dedicated message to the target terminal, wherein the dedicated message carries the indication information.

25. The apparatus according to any one of claims 21 to 24, wherein
the first receiving module is further configured to receive a configuration information acquisition request sent by the target terminal, wherein the configuration information acquisition request carries a first ID; and
the first sending module is further configured to send configuration information of data collection to the target terminal, wherein the configuration information of data collection comprises at least one of the following: type of data required to be collected, first identification information indicating purpose of collected data, and configuration of data collection.

26. A data collection apparatus, comprising:
a second receiving module configured to receive indication information, wherein the indication information is used to indicate a target terminal to participate in data collection; and
a collection module configured to perform data collection based on the indication information.

27. The apparatus according to claim 26, wherein the collection module performing data collection based on the indication information comprises:
sending a configuration information acquisition request to a first target network-side device based on a first ID;
acquiring configuration information of data collection sent by the first target network-side device; and
performing data collection based on the configuration information of data collection.

28. The apparatus according to claim 27, wherein the collection module sending a configuration information acquisition request to a first target network-side device based on a first ID comprises:
sending the configuration information acquisition request carrying the first ID to the first target network-side device; or
sending the configuration information acquisition request to the first target network-side device based on a terminal-dedicated channel corresponding to the first ID.

29. The apparatus according to claim 26, wherein the apparatus further comprises:
a connection module configured to: in a case that the target terminal is in a non-connected state, establish a connection with the first target network-side device.

30. The apparatus according to any one of claims 26 to 29, wherein the apparatus further comprises:
a second sending module configured to report a data collection report to a second target network-side device based on a second ID, wherein the data collection report comprises data collected by the target terminal, and the second target network-side device comprises a first network-side device or a third network-side device associated with the first network-side device.

31. The apparatus according to claim 30, wherein the second sending module reporting a data collection report to a network side based on a second ID comprises:
reporting the data collection report carrying the second ID to the second target network-side device; or
sending the configuration information acquisition request to the second target network-side device based on a terminal-dedicated channel corresponding to the second ID.

32. The apparatus according to any one of claims 26 to 31, wherein the second receiving module receiving indication information comprises:
in a case that the target terminal is in a non-connected state, receiving a paging message paging the target terminal, wherein the paging message carries the indication information, and the indication information is used to indicate that the target terminal is paged for data collection; or
in a case that the target terminal is in a connected state, receiving a dedicated message sent by a second network-side device, wherein the dedicated message carries the indication information.

33. A network-side device, comprising a processor and a memory, wherein the memory stores a program or an instruction executable on the processor, and when the program or the instruction is executed by the processor, the steps of the data collection indication method according to any one of claims 1 to 8 are implemented.

34. A terminal, comprising a processor and a memory, wherein the memory stores a program or an instruction executable on the processor, and when the program or the instruction is executed by the processor, the steps of the data collection method according to any one of claims 9 to 20 are implemented.

35. A readable storage medium, wherein the readable storage medium stores a program or an instruction, and when the program or the instruction is executed by a processor, the steps of the data collection indication method according to any one of claims 1 to 8 are implemented, or the steps of the data collection method according to any one of claims 9 to 20 are implemented.
